Europäisches Patentamt

European Patent Office

Office européen des brevets

(11) Veröffentlichungsnummer: **0 019 773 B1**

(12) **EUROPÄISCHE PATENTSCHRIFT**

(45) Veröffentlichungstag der Patentschrift:
04.01.84

(51) Int. Cl.³: **B 62 D 33/00**

(21) Anmeldenummer: **80102531.3**

(22) Anmeldetag: **08.05.80**

(54) **Wandplatte.**

(30) Priorität: **09.05.79 DE 2918582**

(43) Veröffentlichungstag der Anmeldung:
**10.12.80 Patentblatt 80/25**

(45) Bekanntmachung des Hinweises auf die Patenterteilung:
**04.01.84 Patentblatt 84/1**

(84) Benannte Vertragsstaaten:
**AT BE CH FR GB LI LU NL SE**

(56) Entgegenhaltungen:
**AT - B - 331 647**
**DE - A - 2 259 403**
**DE - B - 1 924 009**
**DE - U - 7 123 016**
**DE - U - 7 732 143**
**US - A - 3 917 338**

(73) Patentinhaber: **ACKERMANN-FRUEHAUF Corporation & Co oHG, Ludwig-Richter Strasse 1-9, D-5600 Wuppertal 11 (DE)**

(72) Erfinder: **Thiele, Bernd, Schlüssel 59, D-5600 Wuppertal 11 (DE)**
Erfinder: **Franz, Carl, Kiebitzweg 7, D-5600 Wuppertal 1 (DE)**
Erfinder: **Johann, Harald, Am Eckbusch 9, D-5600 Wuppertal 1 (DE)**

(74) Vertreter: **König, Reimar, Dr.-Ing. et al, Patentanwälte Dr.-Ing. Reimar König Dipl.-Ing. Klaus Bergen Wilhelm-Tell-Strasse 14 Postfach 260162, D-4000 Düsseldorf 1 (DE)**

## Wandplatte

Die Erfindung bezieht sich auf eine Wandplatte für Fahrzeugaufbauten aus einer ebenen Deckplatte und einer als Versteifungsprofil mit einstückig verbundenen Abstandshaltern ausgebildeten, mit der ebenen verklebten Deckplatte.

Eine derartige Wandplatte ist aus der DE-OS 2 259 403 bekannt und dient als Bordwand, die aus einem glatten Blech und einem weiteren Blech besteht, das auf einer Oberfläche mit Rippen versehen ist. Die beiden Bleche sind entweder miteinander verschweisst oder verklebt. Die Rippen besitzen eine wabenförmige Struktur und bilden geschlossene Zellen. Nach einem Ausführungsbeispiel sind die Rippen und das Blech einstückig hergestellt, während nach einem anderen Ausführungsbeispiel zwischen zwei ebenen Blechen zwei Profile angeordnet sind und jeweils eine Verbindung zwischen den Profilen sowie dem oberen und dem unteren Deckblech hergestellt werden muss. Das Herstellen solch grosser, in aller Regel mehrere Meter breiter und hoher Bordwände erfordert aufwendige Vorrichtungen und einen erheblichen Arbeitsaufwand, die das Produkt mit hohen Kosten belasten. Ferner benötigen derartige Bordwände wegen ihrer Flächengrösse viel Platz bei der Lagerung sowie beim Transport, was zu Engpässen und Schwierigkeiten führen kann. Weiterhin lassen sich die Elemente der Bordwand nicht ohne weiteres nach neuzeitlichen Strangpressverfahren herstellen, da dem die geschlossene Wabenstruktur der Rippen entgegensteht. Schliesslich ist auch nicht erkennbar, wie bei diesen Bordwänden Zurrelemente eingehängt werden könnten.

Zwar beschreibt das DE-GM 7 732 143 eine Innenwandverkleidung für einen Transportbehälter oder einen Fahrzeugaufbau mit schlüssellochförmigen Ausnehmungen zur Aufnahme von Hängestangen, jedoch ist hier nichts über den Aufbau des eigentlichen Wandelements offenbart. Die Ausnehmungen weisen auch keine Aushalsungen auf und zeigen keine Einzelheiten der Hängestangen.

Aus Aluminiumstrangpressprofilen hergestellte Metallbordwände sind zwar ebenfalls bekannt, wie sich aus der AT-PS 331 647 ergibt. Diese Metallbordwand für Fahrzeugaufbauten besteht aus einer aus Einzelelementen zusammengesetzten Wandplatte, die als Aluminiumstrangpressprofil ausgebildet ist, komplementäre Stockverbindungselemente aufweist und mit Öffnungen versehen ist, in die sich Zurrelemente einhängen lassen. Die Metallbordwand ist mit Versteifungsprofilen nur im Bereich der zusammengesteckten Ränder der Wandplattenelemente versehen, im übrigen aber nicht doppelwandig ausgebildet. Die Löcher zum Einhängen der Zurrelemente weisen auch keine Aushalsungen auf.

Die US-PS 3 917 338 beschreibt eine einwandige Bordwand, an die Verstärkungspfosten angenietet sind. Auf Flansche der Pfosten sind Ankerplatten aufgeschoben, die mit Löchern versehen sind, in die sich Zurrelemente einhängen lassen. Die Löcher sind als Langlöcher ausgebildet und entlang ihrer langen Seiten mit Rippen verstärkt, die in den Zwischenraum zwischen den Stegen der Pfosten eingreifen.

Auch diese Metallbordwand ist einwandig und weist wegen der Pfosten und der Ankerplatten in den Innenraum ragende Vorsprünge auf, die z.B. durch Gabelstapler leicht beschädigt werden können.

Ausgehend von diesem Stand der Technik und den damit verbundenen Nachteilen sowie von der Überlegung, dass die Festigkeit und Steifigkeit einer grossflächigen Verbundplatte im wesentlichen durch die Deckplatten bestimmt wird, während das Gewicht vom zwischen den Deckplatten befindlichen Material abhängt, liegt der Erfindung die Aufgabe zugrunde, eine für Fahrzeugaufbauten geeignete Wandplatte zu schaffen, die einfach und äusserst stabil ist, sich durch geringes Gewicht auszeichnet sowie sich platz- und arbeitssparend ohne aufwendige Vorrichtungen herstellen lässt. Ausserdem sollte die Wandplatte ein leichtes Befestigen von Halterungen ermöglichen, ohne dass dies einen Einfluss auf die Steifigkeit und Festigkeit der Wandplatte hat.

Diese Aufgabe wird erfindungsgemäss dadurch gelöst, dass das Versteifungsprofil als stranggepresstes Aluminiumprofil mit randseitig angeformten komplementären Steckverbindungselementen ausgebildet ist, und dass in wenigstens einer der Deckplatten Löcher mit in den Zwischenraum zwischen den Deckplatten gerichteten Aushalsungen angeordnet sind.

Die erfindungsgemässe Wandplatte zeichnet sich durch ein geringes Gewicht, hohe Steifigkeit, geringe Herstellungskosten und die Möglichkeit aus, in die Löcher Aufbauelemente, beispielsweise Kleiderstangen, Zurrgurte, Sperrbalken, Regalkonsolen oder Zwischenböden einzuhängen. Auf die Flächen lassen sich auch Polsterungen, beispielsweise in Form von Nadelfilzbahnen aufkleben. Durch die Aushalsungen der Löcher entsteht eine geschlossene Kantenkontur ohne Kerbwirkung mit einer grossen Auflagefläche für einzuhängende Teile, was zu einer geringen spezifischen Flächenpressung führt. Die Aushalsung bewirkt eine örtliche Aussteifung des Lochbereichs und somit des Versteifungsprofils, so dass eine höhere Biegebeanspruchung der Wandplatte möglich ist, da der Ausdrilleffekt der Versteifungsprofile verringert wird.

Um die Steifigkeit und Widerstandsfähigkeit der erfindungsgemässen Wandplatte zu erhöhen, besteht das Versteifungsprofil vorteilhafterweise aus einem flach mäanderförmig verlaufenden Rechteckwellenquerschnitt.

Vorteilhafterweise befinden sich die Löcher in einer zurückstehenden Profilfläche des Versteifungsprofils, damit in diese Löcher eingehängte Aufbauelemente möglichst wenig gegen die Wandplattenebene hervorstehen. Handelt es sich um ovale Langlöcher, so besteht die vorteilhafte Möglichkeit, einzuhängende Aufbauteile gegen ein Verdrehen zu sichern.

Eine günstige Materialkombination für die erfindungsgemässe Wandplatte besteht aus einer Deckplattenbahn aus glasfaserverstärktem Kunststoff und damit verklebten Versteifungsprofilen aus stranggepresstem Aluminium. Die Deckplattenbahn aus glasfaserverstärktem Kunststoff lässt sich, solange sie mit dem Versteifungsprofil noch nicht verbunden ist, als Rolle raumsparend lagern, während die Einzelelemente der Versteifungsprofile ebenfalls leicht zu lagern und zu handhaben sind.

Bei der erfindungsgemässen Wandplatte lassen sich in die Löcher Auf- oder Anbauelemente in Form einer zwischen zwei gegenüberliegenden Wandplatten eingehängten Kleiderstange mit an den Enden angeordneten Einhakteilen, bestehend aus einem das Loch teilweise ausfüllenden Kopfstück und einer die Aushalsung hintergreifenden Nase einhängen. Ist hierbei der Radius des Kopfstücks geringfügig grösser als der des ovalen Langlochs, so ergibt sich bei Verwendung von elastischem Material für das Kopfstück eine volle Auflagefläche und eine einwandfreie Zentrierung. Wird zudem ein teleskopartig in eine Bohrung der Kleiderstange steckbarer Zapfen am Kopfstück und eine Zugfederverbindung des Zapfens mit der Kleiderstange gewählt, so ergibt sich eine gute Sicherung gegen ein Herausspringen, hervorgerufen durch vertilale Fahrzeugbewegungen. Da sich die Nase an der Aushalsung des Langloches verkrallt, kann ein solches Anbauelement kaum in der Lagerung hochspringen, es besteht somit nicht die Gefahr eines Klapperns, und das Material wird geschont, so dass sich eine grössere Lebensdauer ergibt.

Die erfindungsgemässen Löcher gleichen zudem Bautoleranzen in der Fahrzeuginnenbreite bzw. ausgebauchte Seitenwände aus, wobei durch eine Begrenzung des Teleskopweges nach aussen zusätzliche Zugkräfte aufgenommen werden, so dass sich eine Seitenplattenwand nur begrenzt nach aussen ausbauchen kann.

Die Langlöcher der erfindungsgemässen Wandplatte können auch dazu dienen, einen Zurrgurt zwischen zwei gegenüberliegenden Wandplatten einzuhängen. Hierzu ist ein solcher Zurrgurt mit an den Enden angeordneten Haken aus einem in einer Schlaufe des Zurrgurts angeordneten Knebel mit die Aushalsung hintergreifenden Nasen versehen.

In ähnlicher Weise lässt sich zwischen gegenüberliegenden Wandplatten ein Sperrbalken anordnen, der mit wenigstens einem unter Federkraft teleskopierbaren und in ein Loch eingreifenden Kopfstück versehen ist.

Weitere Anbauelemente bestehen vorteilhafterweise aus in die Löcher einhängbaren Regalkonsolen; so lassen sich im Innenraum eines aus erfindungsgemässen Wandplatten bestehenden Fahrzeugaufbaus verschiedenartige Regale anbringen. In ähnlicher Weise lassen sich in einem aus erfindungsgemässen Wandplatten bestehenden Fahrzeugaufbau Zwischenböden einziehen, wenn in die Löcher Winkelträger für Zwischenbodenbretter eingehängt werden.

Die Erfindung wird nachfolgend anhand mehrerer in der Zeichnung dargestellter Ausführungsbeispiele des näheren erläutert. In der Zeichnung zeigen:

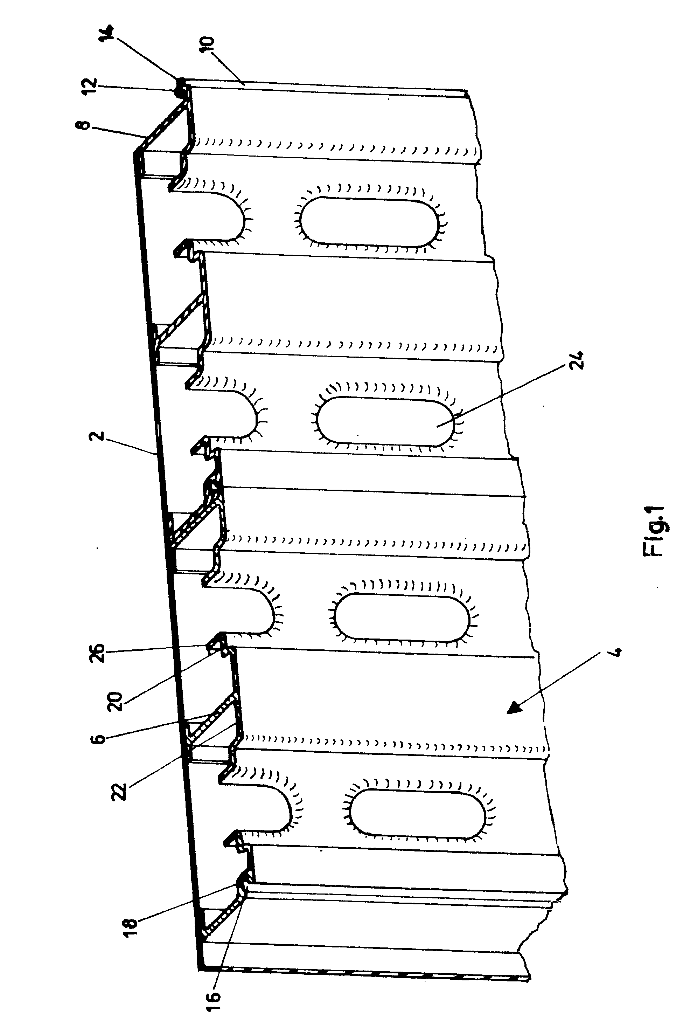

Fig. 1 eine perspektivische Teilansicht einer erfindungsgemässen Wandplatte im Schnitt,
Fig. 2 eine Teilansicht einer in eine Wandplatte eingehängten Kleiderstange,
Fig. 3 eine Teilansicht eines in eine Wandplatte eingehängten Zurrgurtes,
Fig. 4 eine Teilansicht eines in eine Wandplatte eingehängten Sperrbalkens,
Fig. 5 eine Seitenansicht einer in eine Wandplatte eingehängten Regalkonsole,
Fig. 6 eine Draufsicht auf eine in eine Wandplatte eingehängte Regalkonsole gemäss Fig. 5,
Fig. 7 eine Teilansicht eines in eine Wandplatte eingehängten Winkelträgers für einen Zwischenboden und
Fig. 8 eine perspektivische Teilansicht eines in eine Wandplatte gemäss Fig. 7 eingehängten Winkelträgers.

Eine Deckplattenbahn 2 vorzugsweise aus glasfaserverstärktem Kunststoff bildet die eine Oberfläche der Wandplatte und dient beim Herstellen der Wandplatte als Grundfläche, auf die Versteifungsprofile 4 aufgeklebt werden. Die Versteifungsprofile 4 besitzen einen flachen mäanderförmig verlaufenden Rechteckwellenquerschnitt mit einer Profiltiefe, die in der Grössenordnung der Profildicke bzw. etwa des Zwei- bis Dreifachen der Profildicke liegt. Mit dem Versteifungsprofil 4 sind Abstandshalter einstückig verbunden, die im mittleren Bereich als T-förmige Abstandshalter 6 und im Randbereich als L-förmig abgebogene Abstandshalter 8 ausgebildet sind, die bündig mit benachbarten Abstandshaltern 8 abschliessen. Die Versteifungsprofile 4 mit den Abstandshaltern 6, 8 bestehen aus stranggepressten Aluminiumteilen.

Die Versteifungsprofile 4 sind durch eine Clipverbindung miteinander verbunden. Jeweils längs des einen Randes des Versteifungsprofils 4 verläuft eine Clipnase 10, bestehend aus einer hinterschnittenen Abrundung 12 und einem parallel zur Profilebene aus der Abrundung 12 hervortretenden Steg 14. Am gegenüberliegenden Rand des Versteifungsprofils 4 befindet sich eine Nut 16 mit komplementärem Profil in Form einer seitlichen Vertiefung 18, deren Breite grösser ist als die Breite des Steges 14 am gegenüberliegenden Rand des Versteifungsprofils 4. Demzufolge lässt sich die Clipnase 10 in die Nut 16 einbringen und somit ein Versteifungsprofil 4 mit einem anderen durch Verschwenken um einen gewissen Winkel in Richtung der Deckplattenbahn 2 verbinden.

Die Versteifungsprofile 4 sind mit in regelmässigen Abständen angeordneten ovalen Langlöchern 24 versehen, die sich in den Wellentälern 20 befinden, während die Wellenkämme 22 mit den Abstandshaltern 6, 8 verbunden sind. Die ovalen Langlöcher 24 sind mit einer in den Zwischenraum zwischen der Deckplattenbahn 2 und den Versteifungsprofilen 4 ragenden Aushalsung 26 versehen, die zu einer örtlichen Aussteifung des Lochbereichs der Versteifungsprofile 4 führt.

In die Langlöcher 24 lassen sich verschiedene Anbauelemente einhängen.

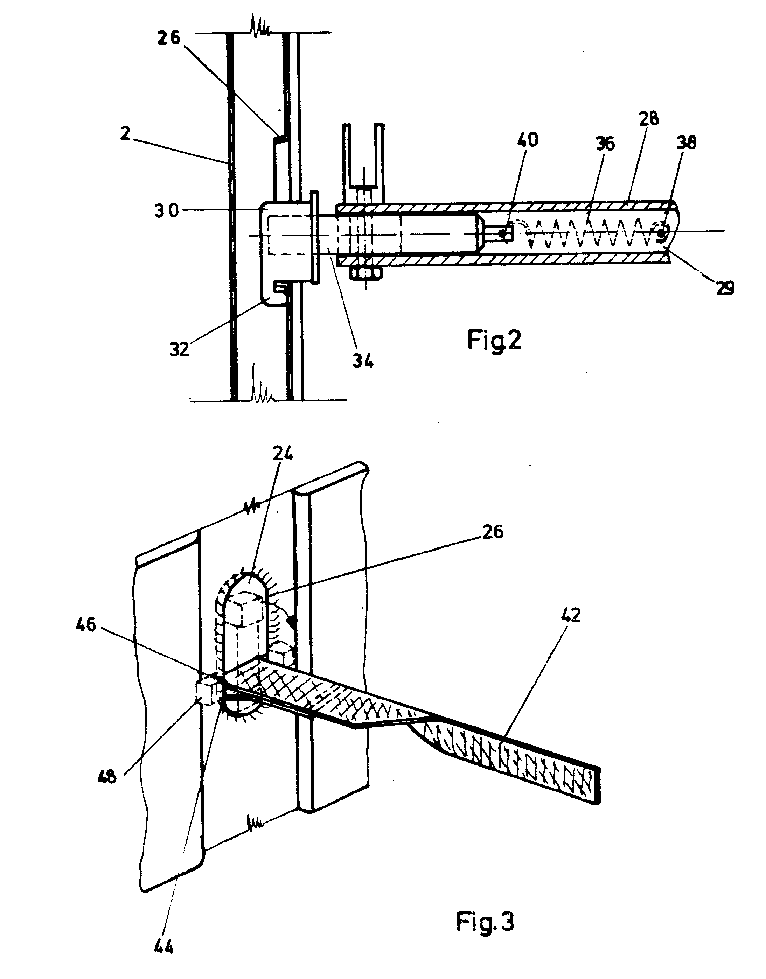

In Fig. 2 ist eine rohrförmige Kleiderstange 28 dargestellt, in deren Bohrung 29 ein an einem Kopfstück 30 befestigter Zapfen 34 teleskopartig verschiebbar ist. Das Kopfstück 30 ist in ein ovales Langloch 24 eingehängt und hintergreift mit seiner Nase 32 die Aushalsung 26. Der Zapfen 34 ist mit der Kleiderstange 28 über eine Zugfeder 36 verbunden, deren eines Ende mittels eines Querstiftes 38 an der Kleiderstange 28 befestigt ist, während das andere Ende in ein Querloch 40 im Zapfen 34 eingehängt ist. Auf diese Weise liegt die Nase 32 zwangsläufig stets an der Aushalsung 26 an, so dass kein Klappern während der Fahrt möglich ist.

In die Langlöcher 24 lassen sich auch Zurrgurte 42 einhängen (Fig. 3). Zu diesem Zweck weist ein solcher Zurrgurt 42 an seinen Enden Schlaufen 44 auf, durch die ein Knebel 46 mit seitlichen Nasen 48 gesteckt wird. Diese Nasen 48 hintergreifen im dargestellten Montagezustand die Aushalsung 26 eines Langloches 24, während durch Verdrehen des Knebels 46 die gestrichelte Stellung erreichbar ist und der Knebel 46 aus dem Langloch 24 herausgezogen werden kann.

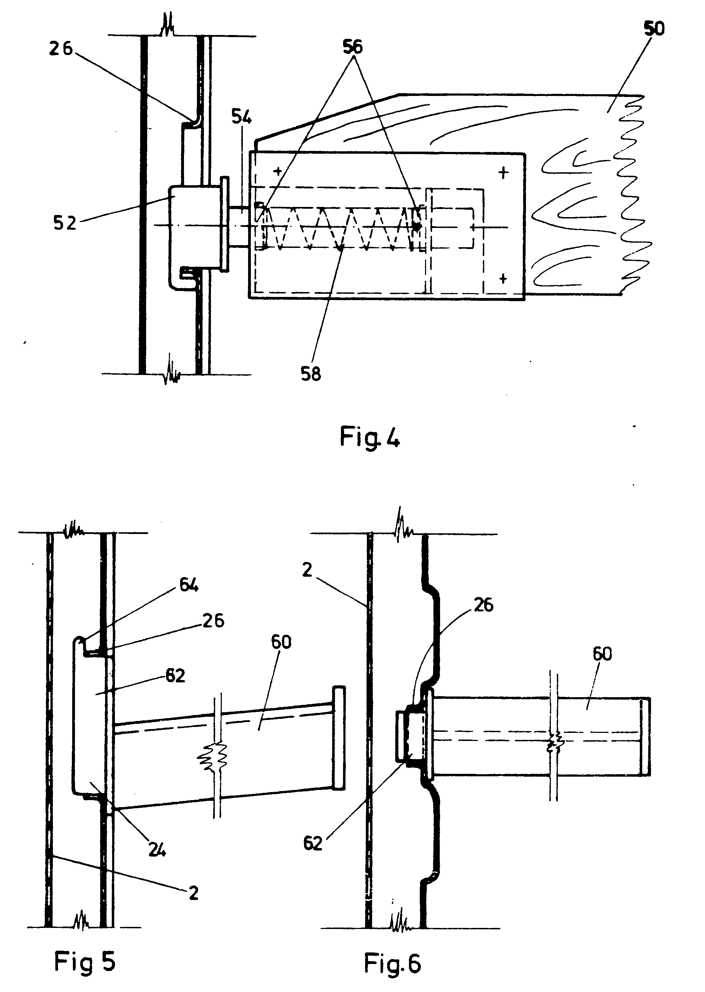

Eine weitere Moglichkeit Anbauelemente in die Langlöcher 24 einzuhängen, ist in Fig. 4 dargestellt. Hierbei handelt es sich um einen Sperrbalken 50, an dessen Ende ein in ein Langloch 24 passendes Kopfstück 52 angeordnet ist. Dieses Kopfstück 52 weist eine Schiebestange 54 auf, die in Führungsaugen 56 am Sperrbalken 50 geführt ist. Mittels einer Feder 58 wird die Schiebestange 54 mit dem Kopfstück 52, das mit seiner Nase die Aushalsung 26 hintergreift. in der Verriegelungslage gehalten, so dass das Kopfstück 52 aus dem Langloch 24 nicht herausspringen kann.

Eine in Fig. 5 und 6 dargestellte Regalkonsole 60 ist mit einem Haken 62 versehen, dessen Nase 64 hinter die Aushalsung 26 eines Langlochs 24 greift. Auf diese Weise ist es moglich, an den aus den erfindungsgemässen Wandplatten bestehenden Seitenwänden eines Fahrzeugaufbaus Regale anzuordnen, die den verschiedensten Zwecken dienen können.

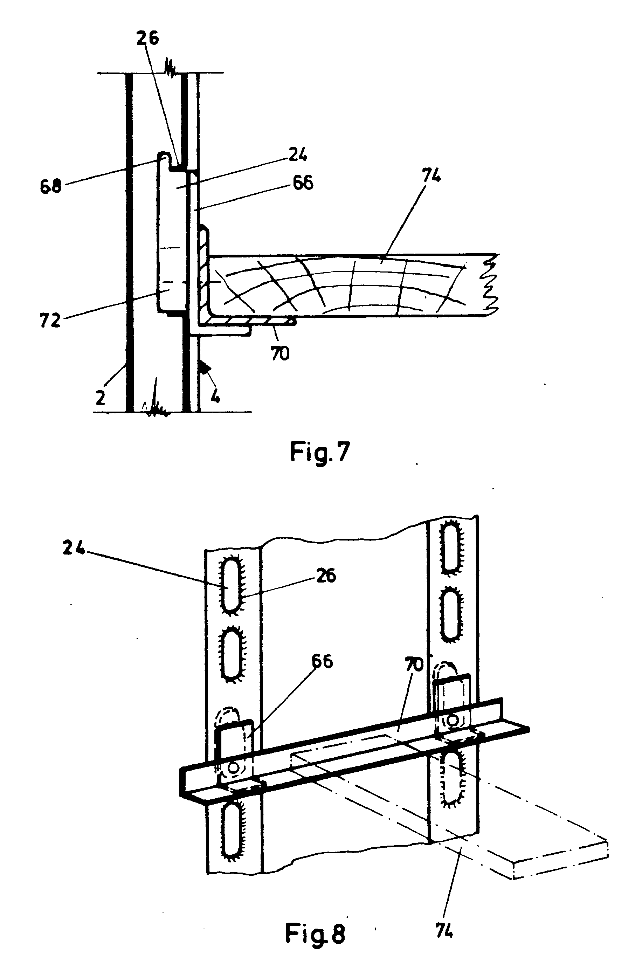

Eine weitere vorteilhafte Möglichkeit der Ausnutzung des erfindungsgemässen Wandelements besteht darin, in die Langlöcher 24 Winkelträger 66 mit die Aushalsungen 26 hintergreifenden Nasen 68 einzuhängen (Fig. 7 und 8). Die Winkelträger 66 sind so beschaffen, dass ein mit einer Nase 68 versehener Haken 72 jeweils in ein Langloch 24 eingreift. Auf den Winkeleisen 70 lassen sich dann Zwischenbodenbretter 74 verlegen, so dass eine Aufteilung des Fahrzeugaufbaus mit Zwischenböden je nach Bedarf möglich ist.

## Patentansprüche

1. Wandplatte für Fahrzeugaufbauten aus einer ebenen Deckplatte (2) und einer als Versteifungsprofil mit einstückig verbundenen Abstandshaltern (6, 8) ausgebildeten, mit der ebenen verklebten Deckplatte (4), dadurch gekennzeichnet, dass das Versteifungsprofil (4) als stranggepresstes Aluminiumprofil mit randseitig angeformten komplementären Steckverbindungselementen (10, 12, 14, 16, 18) ausgebildet ist und dass in wenigstens einer der Deckplatten (2, 4) Löcher (24) mit in den Zwischenraum zwischen den Deckplatten (2, 4) gerichteten Aushalsungen (26) angeordnet sind.

2. Wandplatte nach Anspruch 1, dadurch gekennzeichnet, dass das Versteifungsprofil (4) einen flach mäanderförmig verlaufenden Rechteckwellenquerschnitt besitzt.

3. Wandplatte nach Anspruch 2, dadurch gekennzeichnet, dass sich die Löcher (24) in einer zurückstehenden Profilfläche (20) des Versteifungsprofils (4) befinden.

4. Wandplatte nach einem der Ansprüche 1 bis 3, gekennzeichnet durch ovale Langlöcher (24).

5. Wandplatte nach einem der Ansprüche 1 bis 4, gekennzeichnet durch eine Deckplattenbahn (2) aus glasfaserverstärktem Kunststoff.

6. Wandplatte nach einem der Ansprüche 1 bis 5, gekennzeichnet durch eine eingehängte Kleiderstange (28) mit an den Enden angeordneten Einhakteilen, bestehend aus einem das Loch (24) teilweise ausfüllenden Kopfstück (30) und einer die Aushalsung (26) hintergreifenden Nase (32).

7. Wandplatte nach Anspruch 6, gekennzeichnet durch einen teleskopartig in eine Bohrung (29) der Kleiderstange (28) gesteckten Zapfen (34) am Kopfstück (30) und eine Zugfederverbindung (36, 38, 40) des Zapfens (34) mit der Kleiderstange (28).

8. Wandplatte nach einem der Ansprüche 1 bis 4, gekennzeichnet durch einen eingehängten Zurrgurt (42) mit an den Enden angeordneten Einhakteilen aus einem in einer Schlaufe (44) des Zurrgurtes (42) angeordneten Knebel (46) mit die Aushalsung (26) hintergreifenden Nasen (48).

9. Wandplatte nach einem der Ansprüche 1 bis 4, gekennzeichnet durch einen Sperrbalken (50) mit wenigstens einem unter Federkraft teleskopierbaren in ein Loch (24) eingreifenden Kopfstück (52).

10. Wandplatte nach einem der Ansprüche 1 bis 4, gekennzeichnet durch in die Löcher (24) eingehängten Regalkonsolen (60).

11. Wandplatte nach einem der Ansprüche 1 bis 4, gekennzeichnet durch in die Löcher (24) eingehängte Winkelträger (66) mit Zwischenbodenbrettern (74).

12. Wandplatte nach einem der Ansprüche 1 bis 4, gekennzeichnet durch eine Polsterung in Form von wenigstens teilweise über die Innenflächen der Wandplatte geklebten Nadelfilzbahnen.

## Claims

1. Wall panel for vehicle superstructures, consisting of a plane cover plate (2) and a cover plate (4) bonded thereto and constructed as stiffening profile with integrally connected spacers (6, 8), characterized in that the stiffening profile (4) is constructed as extruded aluminium profile with complementary push-in connecting elements (10, 12, 14, 16, 18) formed on its edges and that, in at least one of the cover plates (2, 4), holes (24) with necked-out rims (26) oriented into the space between the cover plates (2, 4) are disposed.

2. Wall panel according to Claim 1, characterized in that the stiffening profile (4) has a shallow, meandering square-wave cross-section.

3. Wall panel according to Claim 2, characterized in that the holes (24) are situated in a recessed profile area (20) of the stiffening profile (4).

4. Wall panel according to one of Claims 1 to 3, characterized by oval elongated holes (24).

5. Wall panel according to one of Claims 1 to 4, characterized by a cover plate sheet (2) of glass fibre-reinforced plastics.

6. Wall panel according to one of Claims 1 to 5, characterized by a hooked-in clothing rod (28) with hook components disposed at its ends, the hook component consisting of a head piece (30) partly filling the hole (24) and of a nose (32) engaging behind the necked-out rim (26).

7. Wall panel according to Claim 6, characterized by a pin (34) on the head piece (30), the pin being pushed telescopically into a bore (29) of the clothing rod (28), and by a tension spring connection (36, 38, 40) of the pin (34) with the clothing rod (28).

8. Wall panel according to one of Claims 1 to 4, characterized by a hooked-in clamping band (42) having, at the ends, hook components consisting of a toggle (46), disposed in a loop (44) of the clamping band (42) and with noses (48) engaging behind the necked-out rim (26).

9. Wall panel according to one of Claims 1 to 4, characterized by a locking beam (50) having at least one head piece (52), engaging under spring force telescopically into a hole (24).

10. Wall panel according to one of Claims 1 to 4, characterized by shelf brackets (60), hooked into the holes (24).

11. Wall panel according to one of Claims 1 to 4, characterized by angle brackets (66), hooked into the holes (24), with intermediate floor planks (74).

12. Wall panel according to one of Claims 1 to 4, characterized by an upholstery in the form of needle felt sheets at least partly glued over the inner faces of the wall panel.


## Revendications

1. Panneau de cloison pour superstructures de véhicules, composé d'une plaque de parement plane (2) et, collée à celle-ci, d'une plaque de parement (4) conçue en tant que profilé de rigidification avec des entretoises (6, 8) reliées d'une seule pièce, caractérisé en ce que le profilé de rigidification (4) est formé d'un profilé en aluminium extrudé avec des éléments de liaison complémentaires de rive venus d'extrusion (10, 12, 14, 16, 18), et en ce que dans au moins l'une des plaques de parement (2, 4) sont disposés des trous (24) ayant des collerettes (26) dirigées dans l'intervalle entre les plaques de parement (2, 4).

2. Panneau de cloison selon la revendication 1, caractérisé en ce que le profilé de rigidification (4) a une section présentant la forme d'ondes rectangulaires suivant un tracé en méandres plats.

3. Panneau de cloison selon la revendication 2, caractérisé en ce que les trous (24) se trouvent dans une surface en renfoncement (20) du profilé de rigidification.

4. Panneau de cloison selon l'une des revendications 1 à 3, caractérisé en ce que les trous (24) sont ovales.

5. Panneau de cloison selon l'une des revendications 1 à 4, caractérisé par une feuille de parement (2) en matière synthétique renforcée par des fibres de verre.

6. Panneau de cloison selon l'une des revendications 1 à 5, caractérisé en ce qu'il comporte une tringle à vêtements (28) accrochée comportant à ses extrémités des parties formant crochets constituées par un embout (30) remplissant partiellement le trou (24) et par un ergot (32) en prise avec la collerette (26) par l'arrière de celle-ci.

7. Panneau de cloison selon la revendication 6, caractérisé en ce que la tringle à vêtements (28) comporte près de l'embout (30) un axe (34) engagé télescopiquement dans un alésage (29) et reliée à cette tringle (28) par un ressort de traction (36, 38, 40).

8. Panneau de cloison selon l'une des revendications 1 à 4, caractérisé en ce qu'il comporte une sangle suspendue (42) ayant à ses extrémités des éléments d'accrochage constitués par un garrot (46) disposé dans une boucle (44) de la sangle (42) et muni d'ergots (48) en prise avec la collerette (26) par l'arrière de celle-ci.

9. Panneau de cloison selon l'une des revendications 1 à 4, caractérisé en ce qu'il comporte un barrot (50) avec au moins un embout télescopique (52) soumis à la force d'un ressort et s'engageant dans un trou (24).

10. Panneau de cloison selon l'une des revendications 1 à 4, caractérisé en ce qu'il comporte des consoles à rayonnages (60) accrochées dans les trous (24).

11. Panneau de cloison selon l'une des revendications 1 à 4, caractérisé en ce qu'il comporte des profilés en L (66) accrochés dans les trous (24) et des planches (74) formant un étage intermédiaire.

12. Panneau de cloison selon l'une des revendications 1 à 4, caractérisé en ce qu'il comporte un capitonnage sous forme de nappes de feutre aiguilleté collées au moins partiellement sur les surfaces intérieures du panneau.

Fig.1

0 019 773

Fig2

Fig. 3

9

Fig. 4

Fig 5

Fig. 6

Fig. 7

Fig. 8